(19) **Europäisches Patentamt**

**European Patent Office**

**Office européen des brevets**

(11) **EP 1 446 447 B1**

(12) **EUROPEAN PATENT SPECIFICATION**

(45) Date of publication and mention
of the grant of the patent:
**06.04.2005 Bulletin 2005/14**

(51) Int Cl.⁷: **C08K 9/08**, C09C 1/30

(21) Application number: **02803060.9**

(86) International application number:
**PCT/GB2002/004697**

(22) Date of filing: **17.10.2002**

(87) International publication number:
**WO 2003/042293 (22.05.2003 Gazette 2003/21)**

(54) **SILICA MATTING AGENTS**

SILICIUMDIOXID-MATTIERUNGSMITTEL

AGENTS DE MATITE SILICIEUX

(84) Designated Contracting States:
**AT BE BG CH CY CZ DE DK EE ES FI FR GB GR
IE IT LI LU MC NL PT SE SK TR**

(30) Priority: **13.11.2001 GB 0127220**

(43) Date of publication of application:
**18.08.2004 Bulletin 2004/34**

(73) Proprietor: **INEOS Silicas Limited
Warrington WA5 1AB (GB)**

(72) Inventors:
• **MOREA-SWIFT, Gemma
Cheshire WA5 1AB (GB)**
• **GIBSON, Robin, Riyadh
Chester CH3 9AX (GB)**

(74) Representative:
**Collingwood, Anthony Robert et al
Lloyd Wise, McNeight & Lawrence
c/o Commonwealth House
1-19 New Oxford Street
London WC1A 1LW (GB)**

(56) References cited:
**EP-A- 0 541 359          WO-A-97/08250**

• **DATABASE WPI Section Ch, Week 199534
Derwent Publications Ltd., London, GB; Class
A17, AN 1995-261494 XP002230795 & JP 07
166091 A (NIPPON SILICA KOGYO KK), 27 June
1995 (1995-06-27)**

Remarks:
The file contains technical information submitted
after the application was filed and not included in this
specification

**Description**

This invention relates to silica matting agents and, in particular to wax-coated silica matting agents.

Wax-coated silica matting agents have been used in paints, varnishes and lacquers. Waxes which have been used in preparing such matting agents include microcrystalline waxes and synthetic polyethylene waxes. When used in clear films such as solvent-based lacquers for wood, the known matting agents give good film smoothness and transparency, but it is desirable to improve upon the performance of existing matting agents.

It has now been surprisingly found that the use of certain polyolefin waxes to coat silica provides matting agents having a superior performance, particularly in clear solvent-based lacquers designed to be used on wood.

According to the invention, a silica matting agent comprises particulate amorphous silica characterised in that the particles of silica have been treated with a hydrophilic polyolefin wax.

The silica of the invention is treated with a hydrophilic polyolefin wax and is generally referred to as a wax-coated silica. This does not necessarily imply that all the silica particles are coated with wax or that the particles are uniformly or completely coated with wax.

It has been found that, in comparison to conventional wax-coated silicas, the products of the invention possess better wetting properties when mixed with a resin system and produce a cured resin film with better transparency and smoothness, as demonstrated by a hand-feel test.

The polyolefin wax can be a polymer or copolymer of any olefin, such as ethylene or propylene, but preferred polyolefin waxes are polyethylene waxes.

Particularly preferred hydrophilic polyethylene waxes for use in treating silica to prepare the matting agents of this invention include those sold by Cray Valley Speke as Crodawax WN 1442 and by Lubrizol Coating Additives GmbH as Lanco™ PEW 1555.

The preparation of polar and, therefore, hydrophilic polyolefin waxes, is well known. For example, a non-polar polyethylene wax can be oxidised by passing air into molten wax or into wax in an inert dispersion medium. Alternatively, a polyethylene plastic can be degraded oxidatively under conditions which result in both chain cleavage and oxidation. Oxidative degradation can be carried out by passing air or oxygen-enriched air into a dispersion of polyethylene plastic or over solid plastic at elevated temperature. The high pressure copolymerisation of ethylene with oxygen-containing comonomers, especially acrylic acid, produces a polar form of polyethylene and the molecular weight can be controlled to produce a wax. Polar polyolefins can also be produced by radical grafting of polar unsaturated monomers onto non-polar polyolefin waxes. By these means, it is believed that oxygen-containing functional groups, such as carboxyl, carbonyl, ester and hydroxy groups are introduced into the wax molecule.

In addition to synthetic modification of a polyolefin wax as outlined above, the hydrophilicity of both unmodified and modified polyolefin waxes can be increased by the blending of the wax with compatible hydrophilic materials, such as surfactants or non-olefinic hydrophilic polymers. The blending of such materials is generally intimate; for example the materials are mixed when molten and cooled to give a solid, continuous, homogeneous material which can be easily processed further by physical means.

Polar polyolefin waxes usually have an acid number in the range 10 to 110 mg KOH per g and, frequently, in the range 10 to 60 mg KOH per g, which reflects the presence of, for example, carboxyl groups in the polymer. However, where the hydrophilicity of the polyolefin wax is a result of blending hydrophilic materials with the wax, the acid number is frequently lower than for modified waxes and may be in the range 1 to 60 mg KOH per g.

The weight average molecular weight of hydrophilic polyolefin waxes suitable for use in this invention is generally in the range 800 to 30000 and preferably is in the range 800 to 10000.

Usually the melting point of the hydrophilic wax is in the range 80 to 160° C and preferred waxes have a melting point in the range 100 to 130° C.

The amount of hydrophilic polyolefin wax present in the matting agent of the invention is preferably at least 3 per cent by weight with respect to untreated silica and, usually, the amount is less than 20 per cent by weight with respect to untreated silica. More preferably, the amount of hydrophilic polyolefin wax present is in the range 5 to 12 per cent by weight with respect to untreated silica.

Generally, the silica used to produce the matting agent can be any silica which has found use as a matting agent. Silicas prepared by the gel process or the precipitation process can be used.

Usually, the matting agent will have a weight mean particle size, as measured by Malvern Mastersizer® in the range 2 to 20 μm. Preferably, the particle size of the matting agent, as measured by Malvern Mastersizer® , is in the range 3 to 8 μm. Preferably, 90 per cent by weight of the particles have a size below 25 μm and, more preferably, 90 per cent of the particles by weight are below 12 μm.

The BET surface area of the untreated silica is generally in the range 100 to 800 $m^2g^{-1}$ and preferably in the range 200 to 600 $m^2g^{-1}$.

The pore volume to nitrogen of the untreated silica is preferably greater than 1.0 $cm^3g^{-1}$ and more preferably greater than 1.5 $cm^3g^{-1}$. Usually, the pore volume to nitrogen will not be greater than 2.1 $cm^3g^{-1}$.

Usually, the untreated silica will have an oil absorption greater than 100 $cm^3$/100 g, and, preferably, the oil absorption will be in the range 100 to 500 $cm^3$/100 g.

The silica can be treated with the hydrophilic polyolefin wax using any method which provides a product in which the wax is reasonably uniformly mixed with the silica. A preferred method comprises passing the silica and the wax concurrently through a size reduction apparatus such as a microniser or a jet mill. Usually, when such processes are used to prepare silica matting agents according to the invention, it is preferable to use a hydrophilic wax having a small particle size, such as micronised wax, for the feedstock. A suitable wax has an average particle size below 15 μm. Generally, the silica feedstock will have an average particle size as measured by Malvern Mastersizer® in the range 30 to 300 μm. In a preferred method, the wax and the silica are thoroughly blended in appropriate proportions by mixing in a conventional blender before feeding to the microniser or mill. Alternatively, the wax and silica can be separately fed at appropriate rates to the microniser or mill. The operating conditions of the mill are fixed so as to ensure that the mixture of silica and wax reaches a temperature above the melting point of the wax as it passes through the microniser or mill. Usually, the mixture will be heated to a temperature in the range 100 to 150° C during the milling/treatment process. The silica is also reduced in size during the micronising or milling process so that the treated silica has a particle size appropriate to its use as a matting agent, usually within the limits mentioned hereinbefore.

The matting agents of the invention are suitable for use in a variety of coating systems such as paints, varnishes and lacquers, that is, generally in any system in which conventional silica matting agents have been used. They are particularly suitable for use in clear solvent based lacquer systems such as those designed to be used on wood. Typically, such systems include acrylic, polyester, acrylic/polyurethane, polyester/polyurethane, alkyd urethane, alkyd/urea or nitrocellulose systems. The matting agents of the invention have been shown to perform well in such systems, as measured by low and soft sedimentation of the lacquer on standing, low gloss-up on polishing, scratch resistance, time to wet the matting agent, dispersibility and smoothness of the film, as demonstrated by hand-feel.

Tests used to characterise the matting agents of the invention and their performance in coating systems are described below.

Weight average particle size

The weight mean particle size of the silica is determined using a Malvern Mastersizer® model S, with a 300 RF lens and MS17 sample presentation unit. This instrument, made by Malvern Instruments, Malvern, Worcestershire, uses the principle of Fraunhofer diffraction, utilising a low power He/Ne laser. Before measurement the sample is dispersed ultrasonically in water for 5 minutes to form an aqueous suspension. The Malvern Mastersizer® measures the weight particle size distribution of the silica. The weight mean particle size ($d_{50}$) or 50 percentile is easily obtained from the data generated by the instrument. Other percentiles, such as the 90 percentile ($d_{90}$), are readily obtained.

Surface Area and Pore Volume.

Surface area and pore volume of the silica were measured using standard nitrogen adsorption methods of Brunauer, Emmett and Teller (BET) using a multi-point method with an ASAP 2400 apparatus supplied by Micromeritics of USA. The method is consistent with the paper by S. Brunauer, P.H. Emmett and E. Teller, J. Am. Chem. Soc., **60**, 309 (1938). Samples were outgassed under vacuum at 270° C for 1 hour before measurement at about -196° C.

Oil absorption

The oil absorption is determined by the ASTM spatula rub-out method (American Society of Test Material Standards D 281). The test is based on the principle of mixing linseed oil with the silica by rubbing with a spatula on a smooth surface until a stiff putty-like paste is formed which will not break or separate when it is cut with a spatula. The oil absorption is then calculated from the volume of oil (V $cm^3$) used to achieve this condition and the weight, W, in grams of silica by means of the equation:

$$\text{Oil absorption} = (V \times 100)/W, \text{ i.e. expressed in terms of } cm^3 \text{ oil/100 g silica.}$$

pH

This measurement is carried out on a 5 weight per cent suspension of the silica in boiled demineralised water ($CO_2$ free).

Dispersibility

The dispersibility of the silica matting agent is measured by a "fineness of grind" test. The silica is dispersed in the chosen lacquer (as defined in the examples) at high shear using a Cowles-type stirrer blade in a mixing vessel having parameters as follows; Ratio of Cowles Blade Diameter: Vessel diameter: Vessel Height: Depth of fill : Height of rotor in vessel (from base) : distance from blade tip to vertical vessel wall = 1 : 2.5 : 2.5 : 1 : 0.5 : 0.5. The blade tip speed is 6.3 m/s. The mixture is stirred for 10 minutes, after which the fineness of grind is measured by drawing down the dispersion onto a 0 - 50 μm Hegman Gauge and viewing the drawn down layer with the aid of a display cabinet The result (expressed in micrometers) is indicative of the level of dispersion.

Matting efficiency

The matting efficiency of silica matting agents is determined by dispersing the silica in the chosen solvent based lacquer (as defined in the examples), using the same conditions as described in the Dispersibility test and drawing a 40 μm wet film on a Leneta card or a black glass plate, drying the film as appropriate to the lacquer system employed and measuring the gloss using a Byk multigloss meter at the angle specified in the examples.

Wet-in properties

5 g of the silica matting agent to be tested is added in one fluid movement to a beaker containing 100 g of the chosen lacquer (as specified in the examples) while this is being stirred at 500 rpm using a four-blade propellor with a diameter of 4 cm using the mixing parameters given above in the Dispersibility test. The time taken for the silica powder to disappear from the lacquer surface is noted. The stirring is continued at the same rate for a total of 3 minutes. Then the fineness of grind is measured by drawing down the resulting dispersion onto a 0 - 50 μm Hegman Gauge and viewing the drawn down layer with the aid of a display cabinet.

Sedimentation Rate

Information on settlement behaviour and the nature of the particulate bed formed is obtained by dispersing the matting agents in the paint or lacquer (as described in the examples) at a concentration of 4 per cent by weight. The resulting paint or lacquer containing matting agent is then stored in a graduated cylinder at room temperature. After one week the height of the sediment apparent in the paint or lacquer is measured and recorded as a percentage of total height of the paint or lacquer in the cylinder. To assess the redispersibility of the sediment formed, the measuring cylinder is inverted by hand and the number of inversions required to remove any trace of sediment from the base of the cylinder recorded. An inversion is defined as a "taking an upright measuring cylinder containing lacquer and sediment, inverting to 180° vertically then subsequently returning the cylinder to a fully upright position". On this basis, a "soft" sediment may only require 1 inversion while a "harder" sediment may require many inversions.

Film Optical properties

The optical properties of a lacquer film are assessed by the Haze, Clarity and Transparency of the film. These are determined by dispersing the silica in the chosen solvent based lacquer (as described in the examples), drawing a film at 100 μm wet film thickness on a clear glass plate, drying the film as appropriate for the resin system being used and measuring the gloss using a Byk Haze-gard PLUS meter (Cat. No. 4725). This meter measures the transmittance, clarity and haze of a film. Transmittance is defined as the ratio of total transmitted light to incident light (this is reduced by reflectance and absorbance). Clarity is defined as narrow angle scattering. More specifically, clarity is the percentage of transmitted light that deviates from the incident by less than 2.5° on average. Haze is defined as wide angle scattering. More specifically, haze is the percentage of transmitted light that deviates from the incident by greater than 2.5°. For clear films, such as those used for wood coatings, it is desirable that transmittance and clarity are maximised while haze is minimised.

Gloss-up on polishing

A 100 μm film of paint or lacquer containing the matting agent (as described in the examples) is drawn onto an Leneta 7B card as substrate and the 60° gloss value is measured with a gloss meter as described above for Matting Efficiency. The lacquered substrate is then mounted on a Taber Abraser Model 5151 fitted with felt wheels (model CS-5). The lacquer is subjected to a measured number of revolutions of the wheels and the gloss is measured again in the polished area. The lacquer is abraded over a number of cycles to obtain a "glossing up" curve. A graph of gloss at 60° against number of revolutions is plotted and fitted using the following logarithmic equation:

$$y = a \times [\ln(n)] + b,$$

where y = 60° gloss, n = number of revolutions and b is a numerical value obtained by fitting the curve. The parameter "b" is related to matting efficiency. The parameter "a" is defined as the "rate of gloss-up". The fit of this curve is also determined by calculating the square of the Pearson product ($R^2$). If $R^2 = 1$, the profile of the glossing up curve fits the above equation exactly and is described as logarithmic (i.e. gloss values increase rapidly during initial abrasion then plateau to a constant level). If the value of $R^2$ is significantly less than 1, such as 0.65, then the profile of the glossing up curve can be described as linear (i.e. gloss values increase in a linear fashion over the whole period of the abrasion cycles). Ideally, for lacquers, the rate of glossing-up of a matting agent (value of a) should be as low as possible and the profile of the glossing-up curve should be linear.

Hand-feel

Hand-feel is a subjective test which describes the surface texture as perceived by touch. A dry lacquer is generally considered to have good hand-feel if the surface can be described as having a "dry velvet touch" when any part of a dry hand is drawn across the surface. Paints or lacquers are prepared as described in the examples and films are drawn onto black glass plates at a wet film thickness of 100 μm using a Bird type applicator. The hand feel is evaluated subjectively by a panel of at least 4 experienced people by comparison with appropriate standard plates prepared using commercial matting agents known to give good hand-feel. A single arbitrary number between 0 (good) and 5 (bad) is allocated as a summary of the panel assessment of hand-feel.

The invention is illustrated by the following non-limiting examples.

## EXAMPLES

### Silica Example 1

A silica gel was prepared by mixing 40 per cent by weight sulphuric acid with sodium silicate (molar ratio 3.3 : 1; $SiO_2$ : $Na_2O$), containing 25 per cent by weight $SiO_2$, in a reactant ratio corresponding to an excess of acid (0.25 Normal) and an $SiO_2$ concentration of 18.5 per cent by weight. The silica hydrosol produced was allowed to set to a hydrogel. After washing, the hydrogel was aged at pH 7.5 for 6 hours and the gel pH was subsequently adjusted down to 3.0. It was then flash dried.

The product had the properties shown in Table 1 below.

### Silica Example 2

Neutral sodium silicate liquor (3.3 : 1 ; $SiO_2$ : $Na_2O$ ratio, 25 weight per cent $SiO_2$) was fed at a rate of 8.5 $dm^3$ per minute and mixed with dilute sulphuric acid (40 per cent by weight) being fed at a rate of 3.4 $dm^3$ per minute to produce a hydrosol with the composition 18.2 per cent $SiO_2$, 12.3 per cent sodium sulphate and 3 per cent excess sulphuric acid by weight. This hydrosol was allowed to set to a hydrogel on a continuously moving belt, as described in Example 1 of EP 0 244 168A with a belt residence time of 10 minutes. The hydrogel was cut into lumps of about 1 to 2 cm diameter and fed to a high shear mixer and disintegrated as described in Example 1 of EP 0 244 168A with a residence time in the disintegrator of 30 seconds. The hydrogel slurry produced was then washed in a series of three cyclones by a counter current arrangement using fresh wash water. The slurry was pumped to each hydrocyclone at a rate of 70 kg/min and a pressure of 0.34 Mpa, where it was split into an underflow stream (20 kg/min and 50 wt.% solids (as hydrogel)) and an overflow stream (50 kg/min and 2 wt.% solids (as hydrogel)). Wash water (mains water supply with 90 ppm soda as $Na_2O$), at a rate of 50 kg/min, was added to the final stage of the train. The hydrocyclones had 14 mm diameter vortex finders and 9 mm spigots. After washing, the pH of the hydrogel slurry was adjusted to pH 6 and it was aged at pH 6 for 2 hours. Subsequently the slurry pH was adjusted to pH 2.5 and the silica was flash dried.

The properties of the product are given in Table 1 below.

TABLE 1

| Example | Pore Volume (ml/g) | Surface Area (m²/g) | pH |
|---------|--------------------|--------------------|-----|
| 1 | 2.0 | 300 | 3.0 |

TABLE 1   (continued)

| Example | Pore Volume (ml/g) | Surface Area (m$^2$/g) | pH |
|---|---|---|---|
| 2 | 1.9 | 500 | 2.5 |

### Example 3

Preparation of matting agents.

The silicas of Examples 1 or 2 were mixed with a wax as indicated below so that the resultant silica/wax mixture contained 9 weight per cent of the wax or blend of waxes. This mixture of silica and wax was then fed to an AFG600 fluid bed mill (supplied by Alpine AG, Augsburg, Germany) the classifier speed and feed rate being set so as to produce a micronised product with a weight mean particle size in the range 5.0 to 6.5 µm. The waxes used are listed in Table 2 below.

TABLE 2

| Code | Commercial Name | Type of wax |
|---|---|---|
| x | Wax Blend (as described in EP 0 541 359) | 80 wt. pts. hard microcrystalline wax, Crown® 700[1] |
| | | 10 wt. pts. polyethylene wax, Polywax® 2000[1] |
| | | 10 wt. pts. plasticising microcrysytalline wax, Victory®[1] |
| y | Crodawax WN 1442 | Hydrophilic Polyethylene |
| z | Lanco™ wax PEW 1555 | Hydrophilic Polyethylene |

[1]Available from Baker Petrolite

### Example 4

Wax coated silicas, prepared as described in Example 3 were tested in lacquer formulations as given below.

<u>Alkyd Urethane Lacquer</u>

| | Weight (g) |
|---|---|
| **Part A** | |
| Duramac 307-1297 alkyd/urethane resin[2] | 70.0 |
| Xylene | 18.0 |
| n-Butyl Acetate | 18.0 |
| Iso Propyl Alcohol | 18.0 |
| Byk 358 anti-foam[3] | 1.0 |
| Disperbyk 103 wetting agent[3] | 1.5 |

[2]Available from Eastman

[3]Available from Byk Chemie GmbH

The above ingredients were thoroughly mixed by hand. Then, 100 g of Part A were mixed with an amount of the test silica appropriate to the test to be performed, as follows:

For Matting Efficiency, 4.00 g.
For Optical Properties, 6.00 g.
For Sedimentation Rate, 5.00 g.
For Wet-in, 5.00 g.
For the Wet-in test the silica and Part A were mixed as described hereinbefore in the Wet-in test method. For the other tests, Part A and the silica were mixed using a Heidolph stirrer equipped with 4 cm Cowles head for 10 minutes at 3000 rpm to form Part B. The sedimentation test was performed using Part B. For the remaining tests, 100 g of Part B were then mixed with 20 g Desmodur L75 isocyanate cross-linker (available from Bayer GmbH) using a Heidolph stirrer equipped with a 4 cm Cowles head for 1 minute at 1000 rpm. The mixture was left to stand for 30 minutes before tests for Matting Efficiency and Optical Properties were carried out.

Acrylic Lacquer

| | Weight (g) |
|---|---|
| Paraloid B-66 acrylic resin[4] | 227.5 |
| Toluene | 61.25 |
| Xylene | 61.25 |

[4]Available from Rohm & Haas.

The above ingredients were mixed at 500-1000 rpm using a Heidolph stirrer equipped with a 4 cm Cowles head for 5 minutes and then sieved through a 45 µm sieve. 8.6 g silica were added and dispersed at 3000 rpm for 10 minutes using a Heidolph stirrer equipped with a 4 cm Cowles head. The resulting lacquer was used for the Gloss-up test.

The results of tests on the above formulations are summarised in Table 4, below.

TABLE 4

| Silica | wax | D50 (µm) | Matting (60°) | Haze (%) | Sediment Level (%) | Wet-in[6] (Hegman µm) | Gloss–up rate |
|---|---|---|---|---|---|---|---|
| Ex. 2 | z | 5.0 | 25 | 60 | 72 | 23 C | 4.4 |
| Ex. 2 | z | 5.5 | 23 | 64 | 84 | 24 C | 5.0 |
| Ex. 1 | z | 5.5 | 20 | 58 | 78 | 26 C | 5.3 |
| Ex. 2 | y | 5.0 | 19 | 64 | 90 | 23 SD | 3.0 |
| Ex. 1 | y | 5.5 | 18 | 65 | 74 | 24 VSD | 3.5 |
| Ex. 1 | x | 6.5 | 63 | 70 | 62 | 35 C | 4.2 |
| Syloid ED 30[5] | - | - | 28 | 70 | 64 | >100 | 5.5 |
| Acematt OK412[5] | - | - | 66 | 56 | 52 | 22 C | 7.9 |

[5] Commercially available matting agents.

[6] C = Clear — no visible coarse particles greater than quoted Hegman value; VSD = very slightly dirty - 1 to 6 coarse particles greater than quoted Hegman value; SD = slightly dirty - 6 to 12 coarse particles greater than quoted Hegman value.

**Claims**

1.    A silica matting agent comprising particulate amorphous silica **characterised in that** the particles of silica have been treated with a hydrophilic polyolefin wax.

2.    A silica matting agent according to claim 1 **characterised in that** the hydrophilic polyolefin wax has a molecular weight in the range 800 to 30000.

3.    A silica matting agent according to claim 1 or 2 **characterised in that** the hydrophilic polyolefin wax has a melting point in the range 100 to 130° C.

4.    A silica matting agent according to any one of the preceding claims **characterised in that** the hydrophilic polyolefin wax is present in an amount in the range 3 to 20 per cent by weight with respect to untreated silica.

5. A silica matting agent according to any one of the preceding claims **characterised in that** the silica has a weight mean particle size in the range 2 to 20 μm.

6. A silica matting agent according to any one of the preceding claims **characterised in that** the untreated silica has a BET surface area in the range 100 to 800 $m^2g^{-1}$.

7. A silica matting agent according to any one of the preceding claims **characterised in that** the untreated silica has a pore volume to nitrogen in the range 1.0 to 2.1 $cm^3g^{-1}$.

8. A silica matting agent according to any one of the preceding claims **characterised in that** the untreated silica has an oil absorption in the range 100 to 500 $cm^3$/100 g.

9. A method of preparing a silica matting agent comprising passing particulate amorphous silica and a wax through a size reduction apparatus **characterised in that** the wax is a hydrophilic polyolefin wax.

10. A method of preparing a silica matting agent according to claim 9 **characterised in that** the hydrophilic polyolefin wax has a weight mean particle size below 15 μm.

11. A method of preparing a silica matting agent according to claim 9 or 10 **characterised in that** the silica and wax reach a temperature in the range 100 to 150° C as they pass through the size reduction apparatus.

**Patentansprüche**

1. Silica-Mattierungsmittel enthaltend insbesondere amorphes Siliziumdioxid,
**dadurch gekennzeichnet, dass** die Siliziumdioxid-Partikel mit einem hydrophilen Polyolefin-Wachs behandelt wurden.

2. Silica-Mattierungsmittel gemäß Anspruch 1, **dadurch gekennzeichnet, dass** das hydrophile Polyolefin-Wachs ein Molekulargewicht im Bereich von 800 bis 30000 besitzt.

3. Silica-Mattierungsmittel gemäß Anspruch 1 oder 2, **dadurch gekennzeichnet, dass** das hydrophile Polyolefin-Wachs einen Schmelzpunkt im Bereich von 100 bis 130 °C besitzt.

4. Silica-Mattierungsmittel nach einem der vorhergehenden Ansprüche, **dadurch gekennzeichnet, dass** das hydrophile polyolefin-wachs in einer Menge im Bereich von 3 bis 20 Gew.-% im Hinblick auf das unbehandelte Siliziumdioxid vorliegt.

5. Silica-Mattierungsmittel nach einem der vorhergehenden Ansprüche, **dadurch gekennzeichnet, dass** das Siliziumdioxid eine gewichtete mittlere Korngröße im Bereich von 2 bis 20 μm besitzt.

6. Silica-Mattierungsmittel nach einem der vorhergehenden Ansprüche, **dadurch gekennzeichnet, dass** das unbehandelte Siliziumdioxid eine BET-Oberfläche im Bereich von 100 bis 800 $m^2g^{-1}$ besitzt.

7. Silica-Mattierungsmittel nach einem der vorhergehenden Ansprüche, **dadurch gekennzeichnet, dass** das unbehandelte Siliziumdioxid ein Porenvolumen für Stickstoff im Bereich von 1,0 bis 2,1 $cm^3g^{-1}$ besitzt.

8. Silica-Mattierungsmittel nach einem der vorhergehenden Ansprüche, **dadurch gekennzeichnet, dass** das unbehandelte Siliziumdioxid eine Ölabsorption im Bereich von 100 bis 500 $cm^3$/100 g besitzt.

9. Verfahren zur Herstellung eines Silica-Mattierungsmittels, bei dem partikuläres, amorphes Siliziumdioxid und ein Wachs eine Zerkleinerungsapparatur passiert, **dadurch gekennzeichnet, dass** das Wachs ein hydrophiles Polyolefin-Wachs ist.

10. Verfahren zur Herstellung eines Silica-Mattierungsmittels nach Anspruch 9, **dadurch gekennzeichnet, dass** das hydrophile Polyolefin-Wachs eine gewichtete mittlere Korngröße unterhalb von 15 μm aufweist.

11. Verfahren zur Herstellung eines Silica-Mattierungsmittels nach Anspruch 9 oder 10, **dadurch gekennzeichnet,**

**dass** das Siliziumdioxid und das Wachs eine Temperatur im Bereich von 100 bis 250 °C erreichen, während sie die Zerkleinerungsapparatur passieren.

**Revendications**

1. Agent matant à base de silice comprenant de la silice amorphe particulaire, **caractérisé en ce que** les particules de silice ont été traitées avec une cire de polyoléfine hydrophile.

2. Agent matant à base de silice selon la revendication 1, **caractérisé en ce que** la cire de polyoléfine hydrophile a une masse molaire allant de 800 à 30 000.

3. Agent matant à base de silice selon la revendication 1 ou 2, **caractérisé en ce que** la cire de polyoléfine hydrophile a un point de fusion allant de 100 à 130°C.

4. Agent matant à base de silice selon l'une quelconque des revendications précédentes, **caractérisé en ce que** la cire de polyoléfine hydrophile est présente en une quantité allant de 3 à 20 % en masse par rapport à la silice non traitée.

5. Agent matant à base de silice selon l'une quelconque des revendications précédentes, **caractérisé en ce que** la silice à une taille de particules moyenne en poids allant de 2 à 20 $\mu$m.

6. Agent matant à base de silice selon l'une quelconque des revendications précédentes, **caractérisé en ce que** la silice non traitée a une surface spécifique BET allant de 100 à 800 m$^2$g$^{-1}$.

7. Agent matant à base de silice selon l'une quelconque des revendications précédentes, **caractérisé en ce que** la silice non traitée a un volume de pores à l'azote allant de 1,0 à 2,1 cm$^3$g$^{-1}$.

8. Agent matant à base de silice selon l'une quelconque des revendications précédentes, **caractérisé en ce que** la silice non traitée a une absorption d'huile allant de 100 à 500 cm$^3$/100 g.

9. Procédé de préparation d'un agent matant à base de silice, comprenant le passage de silice amorphe particulaire et d'une cire dans un broyeur, **caractérisé en ce que** la cire est une cire de polyoléfine hydrophile.

10. Procédé de préparation d'un agent matant à base de silice selon la revendication 9, **caractérisé en ce que** la cire de polyoléfine hydrophile a une taille de particules moyenne en poids inférieure à 15 $\mu$m.

11. Procédé de préparation d'un agent matant à base de silice selon la revendication 9 ou 10, **caractérisé en ce que** la silice et la cire atteignent une température allant de 100 à 150°C lorsqu'elles passent dans le broyeur.